# EUROPEAN PATENT SPECIFICATION

(11) **EP 3 370 356 B1**
(45) Date of publication and mention of the grant of the patent: **12.05.2021**
(21) Application number: 17158956.7
(22) Date of filing: 02.03.2017
(51) Int. Cl.: H04K 3/00, H04B 10/116, H04B 10/85

(54) **VISIBLE LIGHT JAMMING SYSTEM AND VISIBLE LIGHT JAMMING METHOD**
STÖRUNGSSYSTEM MIT SICHTBAREM LICHT UND STÖRUNGSVERFAHREN MIT SICHTBAREM LICHT
SYSTÈME ET PROCÉDÉ DE BROUILLAGE DE LUMIÈRE VISIBLE

(43) Date of publication of application: 05.09.2018
(73) Proprietor: Vestel Elektronik Sanayi ve Ticaret A.S., 45030 Manisa (TR)
(72) Inventor: ÖZKÜCÜK, Serhat, 45030 Manisa (TR)
(74) Representative: Kehl, Ascherl, Liebhoff & Ettmayr Patentanwälte Partnerschaft mbB

(56) References cited:
- US-A1- 2017 012 733
- Grzegorz Blinowski: "The feasibility of launching physical layer attacks in visible light communication networks", , 25 August 2016 (2016-08-25), pages 1-6, XP055393801, Retrieved from the Internet: URL:https://arxiv.org/ftp/arxiv/papers/160 8/1608.07146.pdf [retrieved on 2017-07-26]
- MATTHIAS WILHELM ET AL: "Short paper : reactive jamming in wireless networks: how realistic is the threat?", WIRELESS NETWORK SECURITY, 2011, page 47, XP055393912, 2 Penn Plaza, Suite 701 New York NY 10121-0701 USA DOI: 10.1145/1998412.1998422 ISBN: 978-1-4503-0692-8

## Description

### TECHNICAL FIELD

The invention relates to a visible light jamming system for jamming data communication in a visible light communication system. Further, the present invention provides a respective visible light jamming method.

### BACKGROUND

Although applicable to any system that uses visible light for communicating data, the present invention will mainly be described in conjunction with LI-FI systems.

Visible light communication is an emerging communication standard that uses visible light to communicate data between electronic devices. In visible light communication systems data is communicated by modulating visible light that may be received by visible light receivers, which then demodulate the visible light to extract the data from the modulated visible light.

In visible light communication systems modulated light may be emitted by any corresponding device. If the device uses the frequency and data format of the visible light communication system all receivers will receive and process the transmitted data. If no malicious sender is present in a visible light communication system the data transmission can be performed as expected.

However, the fact that visible light is used as carrier for the modulated data allows malicious attackers to send data into a visible light communication system if their sender is within reach of the receivers of the visible light communication system.

A sender may e.g. use a moment in time at which no data is transmitted in the visible light communication system and send its malicious data to the receivers in the visible light communication system.

An attacker may therefore infiltrate the visible light communication system and e.g. control devices in the visible light control system. This is especially harmful if the visible light communication system is e.g. used to control a building automation system and the attacker can gain control over the building automation system.

On the other hand it may be a requirement e.g. of law enforcement units to interrupt a visible light communication system.

"The feasibility of launching physical layer attacks in visible light communication networks", by Grzegorz Blinowski examines the physical layer aspects of VLC networks with respect to possible disruptions caused by rogue transmitters.

Accordingly, there is a need for providing a possibility to prevent data transfer in a visible light communication system.

### SUMMARY OF THE INVENTION

The present invention provides a visible light jamming system with the features of claim 1 and a visible light jamming method with the features of claim 8.

Consequently, a visible light jamming system for jamming data communication in a visible light communication system is provided. The visible light jamming system comprises a visible light detector configured to detect a modulated visible light of the visible light communication system, a signal analyzer coupled to the visible light detector and configured to analyze a frequency and an amplitude of the modulated visible light, i.e. the frequency and amplitude that was used to modulate data into the visible light, a signal generator coupled to the signal analyzer and configured to generate a disturbance visible light signal according to the identified frequency and amplitude, that when emitted disturbs the modulated visible light of the visible light communication system, and a signal emitter coupled to the signal generator and configured to emit the disturbance visible light signal.

Further, a visible light jamming method for jamming data communication in a visible light communication system is provided. The visible light jamming method comprises detecting a modulated visible light of the visible light communication system, analyzing a frequency and an amplitude of the modulated visible light, generating a disturbance visible light signal according to the identified frequency and amplitude, that when emitted disturbs the modulated visible light of the visible light communication system, and emitting the disturbance visible light signal.

The present invention is based on the finding that visible light communication may be jammed by using other visible light signals that overlay the modulated visible light signal of the visible light communication system.

Therefore, with the present invention the modulated visible light of the visible light communication system is recorded with the visible light detector. To be able to generate a jamming signal the signal analyzer identifies in the modulated visible light the frequency and the amplitude used to modulate the modulated visible light.

The signal generator then generates a disturbance visible light signal according to the identified frequency and amplitude such that the disturbance visible light signal when emitted disturbs or jams the modulated visible light of the visible light communication system.

The frequency and amplitude of the modulated visible light are needed to adapt the disturbance visible light signal such that the disturbance visible light signal is accepted by the receivers in the visible light communication system as genuine modulated visible light. Further, analyzing the frequency and amplitude of the modulated visible light allows adapting the disturbance visible light signal to changing modulations in the visible light communication system.

When the disturbance visible light signal is emitted by the signal emitter, the disturbance visible light signal overlays the original modulated visible light and the receivers will take the mixed or overlaid signal as genuine modulated visible light and try to decode the contents.

However, the contents will be modified by the disturbance visible light signal and therefore the receivers will receive wrong data or will discard the received data because error correction mechanisms will detected the modification in the data.

Therefore, with the help of the present invention unwanted modulated visible light signals may be jammed and the data communication in the visible light communication system may be interrupted.

Further embodiments of the present invention are subject of the further subclaims and of the following description, referring to the drawings.

In an embodiment, the signal generator may comprise an adjustable random signal generator configured to randomly generate signal pulses based on the detected frequency and amplitude.

Random pulses are very easy to generate and will randomly overwrite some of the pulses in the modulated visible light, which is enough to jam the signal. Such random pulses will therefore perfectly serve the purpose of jamming the modulated visible light in the visible light communication system.

In an embodiment, the signal generator may comprise a signal modulator configured to generate signal pulses based on jamming signal data and the detected frequency and amplitude.

With the signal modulator specific signal pulses may be specifically generated according to the jamming signal data that may e.g. comprise specific modifications to data packet headers or the like. The signal modulator therefore allows not only jamming the modulated visible light but injecting specific modifications to the modulated visible light.

In an embodiment, the signal pulses may comprise positive pulses.

In visible communication systems the modulation is performed by dimming the visible light. This means that a logic 0 may e.g. be denoted by negative or passive or low pulses with a low light level. In addition, a logic 1 may be denoted by a positive or high pulse with a high light level. It is understood, that an inverse logic may also be used, where a logic 0 is denoted by a positive or high pulse and a logic 1 is denoted by a negative or low pulse. A positive pulse may also denote a pulse, where a modulation is present, while it is not present in a negative pulse. Further, a positive pulse may also denote a pulse, where a modulation with one specific frequency and/or phase is present, while in a negative pulse a modulation with another frequency and/or phase is present.

Physically it is not possible to directly dim pulses with the signal emitter. Dimming pulses would require a large screen or the like that could be dimmed. However, emitting positive or high pulses allows overwriting original low pulses with an increased signal level and therefore converting the low pulses into high pulses.

However, the present invention may also comprise e.g. larges windows that may be darkened to dim incoming light. Such windows may be used to interrupt e.g. unwanted visible light communication into a building or the like.

In an embodiment, the signal analyzer may comprise a computational unit configured to convert the detected modulated visible light into the frequency domain and extract the modulation frequency of the modulation of the modulated visible light based on the transformed modulated visible light.

The computational unit may e.g. be a microcontroller that performs a (Fast) Fourier Transform on the modulated visible light. The frequency of the modulation may be determined e.g. by searching for the maximum signal level in the frequency domain.

In an embodiment, the visible light detector may comprise at least one photosensitive element and especially at least one optical lens configured to focus the visible light onto the photosensitive element.

In an embodiment, the signal emitter may comprise at least one light source, especially a LED, and at least on optical lens configured to spread the visible light generated by the light source.

The visible light detector and the signal emitter may comprise a simple arrangement of optical and electrical elements. In addition, the optical lenses may be provided e.g. in the housing of the photosensitive element or the light source. For example LEDs may comprise a spreading lens in their plastic housing. Using respective LEDs the signal emitter may e.g. only comprise a plurality of LEDs with integrated lenses. No dedicated lens is necessary in such an arrangement.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: a block diagram of an embodiment of a visible light jamming system according to the present invention;
- Fig. 2: a block diagram of another embodiment of a visible light jamming system according to the present invention;
- Fig. 3: a signal flow for an embodiment of a visible light jamming system according to the present invention; and
- Fig. 4: a flow diagram of an embodiment of a visible light jamming method according to the present invention.

In the figures like reference signs denote like elements unless stated otherwise.

### DETAILED DESCRIPTION OF THE DRAWINGS

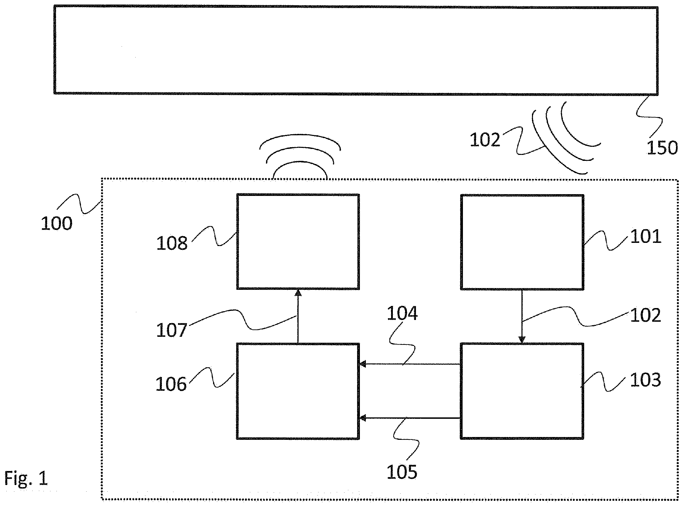

Fig. 1 shows a block diagram of a visible light jamming system 100. The visible light jamming system 100 serves for jamming data communication in a visible light communication system 150. The visible light communication system 150 may be any visible light communication system 150, e.g. in a building or a vehicle, like e.g. an aircraft or a train or the like. The visible light communication system 150 may also be a visible light communication system 150 that e.g. serves to steer a drone or any other aircraft or vehicle that might otherwise be RC controlled.

The visible light jamming system 100 comprises a visible light detector 101 that is coupled to a signal analyzer 103. The signal analyzer 103 is coupled to a signal generator 106, which is coupled to a signal emitter 108.

The visible light detector 101 detects the modulated visible light 102 of the visible light communication system 150 and provides an electrical signal representing the modulated visible light 102 to the signal analyzer 103.

The signal analyzer 103 analyzes or extracts at least a frequency 104 and an amplitude 105 of the modulated visible light 102. The signal analyzer 103 may also extract timing information that allows overlaying a disturbance visible light signal 107 in a timely correct manner over the modulated visible light 102.

The signal analyzer 103 provides the information about the frequency 104 and the amplitude 105 to the signal generator 106

The signal generator 106 then generates a disturbance visible light signal 107, that when emitted disturbs the modulated visible light 102 of the visible light communication system 150. That means that the disturbance visible light signal 107 when overlaid over the modulated visible light 102 will modify the contents of the modulated visible light 102.

Finally, the disturbance visible light signal 107 is provided from the signal generator 106 to signal emitter 108. The signal emitter 108 emits the disturbance visible light signal 107 such that the receivers in the visible light communication system 150 will receive the modulated visible light 102 with the overlaid disturbance visible light signal 107.

The receivers of the visible light communication system 150 will therefore be unable to extract the original data that was modulated into the modulated visible light 102 and the visible light communication system 150 will be successfully jammed.

The visible light communication system 150 may comprise a positive logic, where high or positive signal pulses denote a logical 1 and low or negative signal pulses denote a logical 0. The disturbance visible light signal 107 may therefore comprise positive signal pulses that may overwrite logical 0s in the original modulated visible light 102 with a logical 1.

It is understood that the present invention may also be applied to a negative logic system, where high or positive signal pulses denote a logical 0 and low or negative signal pulses denote a logical 1. In such a system the disturbance visible light signal 107 may comprise positive signal pulses that may overwrite logical 1s in the original modulated visible light 102 with a logical 0.

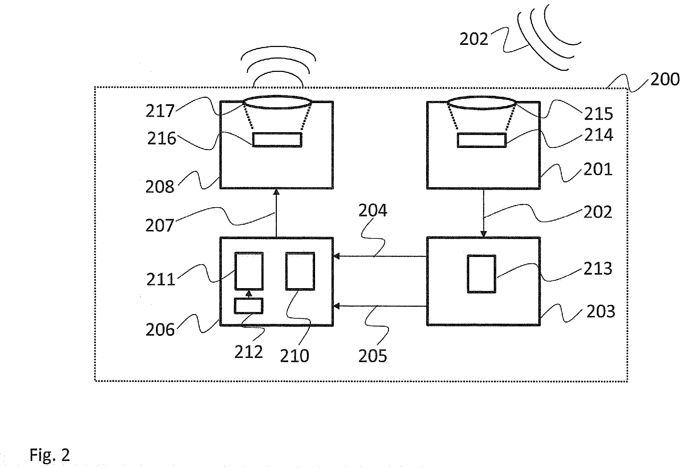

Fig. 2 shows a block diagram of another visible light jamming system 200. The visible light jamming system 200 is based on the visible light jamming system 100. In Fig. 2 the visible light communication system 150 is not separately shown.

The visible light detector 201 comprises an optical lens 215 that focuses the modulated visible light 202 onto a photosensitive element 214, like e.g. a phototransistor or photodiode. The photosensitive element 214 then converts the modulated visible light 202 into a corresponding electrical signal.

The signal analyzer 203 comprises a computational unit 213 that converts the detected modulated visible light 202 or the respective electrical signal into the frequency domain and extracts the frequency 204 of the modulation of the modulated visible light 202 based on the transformed modulated visible light 202. The amplitude 205 may e.g. be extracted by simply searching for a maximum in the modulated visible light 202 or any other method.

The information about the frequency 204 and the amplitude 205 is then provided to the signal generator 206. The signal generator 206 comprises an adjustable random signal generator 210 and a signal modulator 211. It is understood, that the signal generator 206 may also comprise only one of the adjustable random signal generator 210 and the signal modulator 211.

The adjustable random signal generator 210 can randomly generate signal pulses based on the detected frequency 204 and the detected amplitude 205. The adjustable random signal generator 210 therefore serves to simply jam the modulated visible light 202 without any thoughtful modification of the data content of the modulated visible light 202. It is understood that in addition to the frequency 204 and amplitude 205 further timing information or any other information necessary to generate the signal pulses.

The signal modulator 211 in contrast may be used to generate signal pulses based on jamming signal data 212 and the detected frequency 204 and the detected amplitude 205. With the signal modulator 211 the signal pulses may e.g. be generated such that specific header or trailing data of data packets in the modulated visible light 202 are modified e.g. to fake a transmitter or receiver address of the data packet or the like.

In the visible light jamming system 200 the signal emitter 208 comprises one light source 216 that may e.g. be a LED, and one optical lens 217 that spreads the visible light generated by the light source 216.

Although not explicitly shown in Figs. 1 and 2 it is understood that any element, especially the visible light detector 201 and the signal emitter 208, may comprise any further elements, like e.g. filters, amplifiers, attenuators or the like, that may be necessary to receive, analyze or emit any modulated light signal.

Further, the visible light detector 201 and the signal emitter 208 although shown only with one optical lens 215, 217 and one photosensitive element 214 or light source 216, respectively, may comprise any number of photosensitive elements 214 or light sources 216 with the respective number of lenses, respectively.

Further it is understood, that the visible light detector 201 and the signal emitter 208 may be positioned at different locations. The visible light detector 201 may e.g. be positioned at the transmitter or source of the modulated visible light 202 and the signal emitter 208 may be positioned at the receivers of the modulated visible light 202.

With the visible light jamming system 200 the disturbance visible light signal 207 will be emitted only after the analysis of the modulated visible light 202 is performed. However, the analysis may be performed rather quickly, e.g. during transmission of a header of a data packet of the modulated visible light 202. Therefore, the contents of the respective data packet or any part of the following data packets may already be modified.

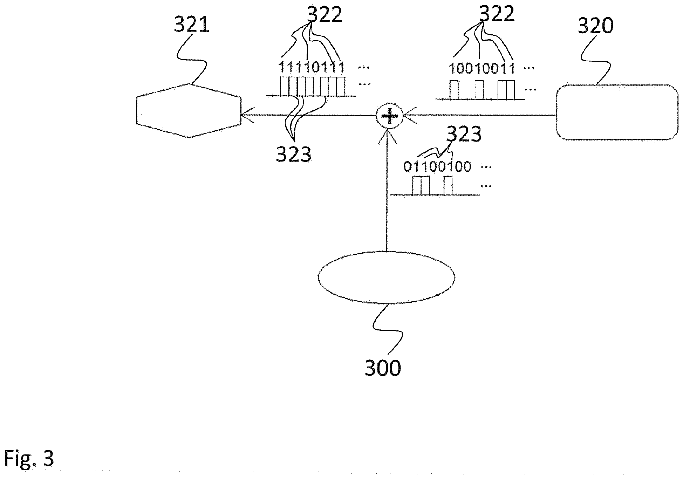

Fig. 3 shows a signal flow for an embodiment of a visible light jamming system 300.

A transmitter 320 as an example generates a visible light signal that comprises the digital data "10010011". The transmitter 320 uses a positive logic, where the logic or digital 1s are represented by positive pulses 322, while the 0s are represented by low pulses.

It is understood, that an inverse logic may also be used, where a logic 0 is denoted by a positive or high pulse and a logic 1 is denoted by a negative or low pulse. A positive pulse may also denote a pulse, where a modulation is present, while it is not present in a negative pulse. Further, a positive pulse may also denote a pulse, where a modulation with a specific frequency and/or phase is present, while in a negative pulse a modulation with another frequency and/or phase is present.

The visible light jamming system 300 after analyzing the signal provided by the transmitter 320 generates a random number of positive signal pulses 323 at random positions. In the presented example the digital data emitted by the visible light jamming system 300 is "01100100".

When the visible light jamming system 300 then emits the disturbance visible light signal with the positive signal pulses 323, the visible light signal emitted by the transmitter 320 is overlaid with the visible light from the visible light jamming system 300 that carries the positive signal pulses 323.

At the receivers 321 that should receive the data from the transmitter 320 the combination of the positive pulses 322 and the positive pulses 323 is received. Therefore, the receivers 321 in the present example will receive "11110111", which is not the original data "10010011".

The communication from the transmitter 320 to the receiver 321 will therefore be effectively jammed.

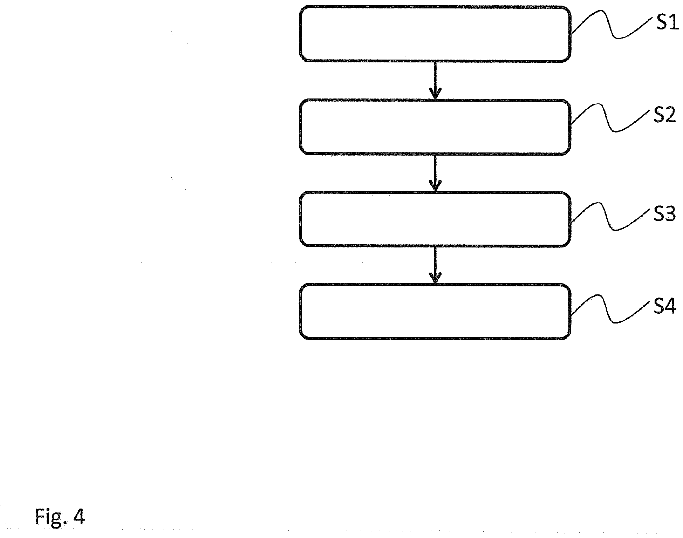

In the following description of the method based Fig. 4 the reference signs used above in the description of apparatus based Figs. 1 - 3 will be maintained for sake of clarity.

Fig. 4 shows a flow diagram of a visible light jamming method for jamming data communication in a visible light communication system 150.

The visible light jamming method comprises detecting S1 modulated visible light 102, 202 of the visible light communication system 150 and analyzing S2 a frequency 104, 204 and an amplitude 105, 205 of the modulated visible light 102, 202.

Detecting S1 may e.g. be performed with at least one photosensitive element 214 and especially at least one optical lens 215 configured to focus the visible light onto the photosensitive element 214.

Analyzing S2 may at least partially be performed in the frequency domain by transforming the detected modulated visible light 102, 202 into the frequency domain and extracting the frequency 104, 204 of the modulation of the modulated visible light 102, 202 based on the transformed modulated visible light 102, 202.

Further, a disturbance visible light signal 107, 207 is generated S3, that when emitted disturbs the modulated visible light 102, 202 of the visible light communication system 150.

Generating S3 may e.g. comprise adjustably generating random signal pulses based on the detected frequency 104, 204 and the detected amplitude 105, 205. In addition or as an alternative, generating S3 may comprise generating signal pulses based on jamming signal data 212 and the detected frequency 104, 204 and amplitude 105, 205. For example, header or trailing data of data packets in the modulated visible light 102, 202 may be overwritten or jammed with signal pulses based on the jamming signal data 212 to perform a controlled modification of that data, while the contents of the data packets may be jammed with random pulses.

Finally, the disturbance visible light signal 107, 207 is emitted to overlay the modulated visible light 102, 202.

Emitting S4 may be performed with at least one light source 216, like e.g. a LED, and at least on optical lens 216 configured to spread the visible light generated by the light source 216.

The scope of the invention is limited only by the appended claims.

### List of reference signs

- 100, 200, 300: visible light jamming system
- 101, 201: visible light detector
- 102, 202: modulated visible light
- 103, 203: signal analyzer
- 104, 204: frequency
- 105, 205: amplitude
- 106, 206: signal generator
- 107, 207: disturbance visible light signal
- 108, 208: signal emitter

- 210: random signal generator
- 211: signal modulator
- 212: jamming signal data
- 213: computational unit
- 214: photosensitive element
- 215: optical lens
- 216: light source
- 217: optical lens

- 320: transmitter
- 321: receiver
- 322: positive pulses
- 323: positive pulses

- 150: visible light communication system

- S1 - S4: method steps

## Claims

1. Visible light jamming system (100, 200, 300) for jamming data communication in a visible light communication system (150), the visible light jamming system (100, 200, 300) comprising:
a visible light detector (101, 201) configured to detect modulated visible light (102, 202) of the visible light communication system (150),
a signal analyzer (103, 203) coupled to the visible light detector (101, 201) and configured to identify a frequency (104, 204) and an amplitude (105, 205) of the detected modulated visible light (102, 202),
a signal generator (106, 206) coupled to the signal analyzer (103, 203) and configured to generate a disturbance visible light signal (107, 207) according to the identified frequency (104, 204) and amplitude (105, 205), that when emitted disturbs the modulated visible light (102,202) of the visible light communication system (150), and
a signal emitter (108, 208) coupled to the signal generator (106, 206) and configured to emit the disturbance visible light signal (107, 207).

2. Visible light jamming system (100, 200, 300) according to claim 1, wherein the signal generator (106, 206) comprises an adjustable random signal generator (210) configured to randomly generate signal pulses based on the detected frequency (104, 204) and amplitude (105, 205).

3. Visible light jamming system (100, 200, 300) according to claim 1, wherein the signal generator (106, 206) comprises a signal modulator (211) configured to generate signal pulses based on jamming signal data (212) and the detected frequency (104, 204) and amplitude (105, 205).

4. Visible light jamming system (100, 200, 300) according to claims 2 and 3, wherein the signal pulses comprise positive pulses (323).

5. Visible light jamming system (100, 200, 300) according to any one of the preceding claims, wherein the signal analyzer (103, 203) comprises a computational unit (213) configured to convert the detected modulated visible light (102, 202) into the frequency domain and extract the frequency (104, 204) of the modulation of the modulated visible light (102, 202) based on the transformed modulated visible light (102, 202).

6. Visible light jamming system (100, 200, 300) according to any one of the preceding claims, wherein the visible light detector (101, 201) comprises at least one photosensitive element (214) and especially at least one optical lens (215) configured to focus the visible light onto the photosensitive element (214).

7. Visible light jamming system (100, 200, 300) according to any one of the preceding claims, wherein the signal emitter (108, 208) comprises at least one light source (216), especially a LED, and at least on optical lens (217) configured to spread the visible light generated by the light source (216).

8. Visible light jamming method for jamming data communication in a visible light communication system (150), the visible light jamming method comprising:
detecting (S1) modulated visible light (102, 202) of the visible light communication system (150),
identifying (S2) a frequency (104, 204) and an amplitude (105, 205) of the detected modulated visible light (102, 202),
generating (S3) a disturbance visible light signal (107, 207) according to the identified frequency (104, 204) and amplitude (105, 205), that when emitted disturbs the modulated visible light (102, 202) of the visible light communication system (150), and
emitting (S4) the disturbance visible light signal (107, 207).

9. Visible light jamming method according to claim 8, wherein generating (S3) comprises adjustably generating random signal pulses based on the detected frequency (104, 204) and amplitude (105, 205).

10. Visible light jamming method according to claim 8, wherein generating (S3) comprises generating signal pulses based on jamming signal data (212) and the detected frequency (104, 204) and amplitude (105, 205).

11. Visible light jamming method according to claims 9 and 10, wherein generating signal pulses comprises generating positive pulses (323).

12. Visible light jamming method according to any one of the preceding claims 8 to 11, wherein analyzing (S2) comprises converting the detected modulated visible light (102, 202) into the frequency domain and extracting the frequency (104, 204) of the modulation of the modulated visible light (102, 202) based on the transformed modulated visible light (102, 202).

13. Visible light jamming method according to any one of the preceding claims 8 to 12, wherein detecting (S1) comprises detecting (S1) the modulated visible light (102, 202) with at least one photosensitive element (214) and especially at least one optical lens (215) configured to focus the visible light onto the photosensitive element (214).

14. Visible light jamming method according to any one of the preceding claims 8 to 13, wherein emitting (S4) comprises emitting (S4) the disturbance visible light signal (107, 207) with at least one light source (216), especially a LED, and at least on optical lens (216) configured to spread the visible light generated by the light source (216).

## Patentansprüche

1. Störsystem für sichtbares Licht (100, 200, 300) zum Stören der Datenkommunikation in einem Kommunikationssystem für sichtbares Licht (150), wobei das Störsystem für sichtbares Licht (100, 200, 300) aufweist:
einen Detektor für sichtbares Licht (101, 201), der so konfiguriert ist, dass er moduliertes sichtbares Licht (102, 202) des Kommunikationssystems für sichtbares Licht (150) erfasst,
einen Signalanalysator (103, 203), der mit dem Detektor für sichtbares Licht (101, 201) gekoppelt und so konfiguriert ist, dass er eine Frequenz (104, 204) und eine Amplitude (105, 205) des erfassten modulierten sichtbaren Lichts (102, 202) identifiziert,
einen Signalgenerator (106, 206), der mit dem Signalanalysator (103, 203) gekoppelt und so konfiguriert ist, dass er ein störendes sichtbares Lichtsignal (107, 207) gemäß der identifizierten Frequenz (104, 204) und Amplitude (105, 205) erzeugt, das, wenn es ausgesendet wird, das modulierte sichtbare Licht (102, 202) des Kommunikationssystems für sichtbares Licht (150) stört, und
einen Signalemitter (108, 208), der mit dem Signalgenerator (106, 206) gekoppelt und so konfiguriert ist, dass er das störende sichtbare Lichtsignal (107, 207) emittiert.

2. Störsystem (100, 200, 300) für sichtbares Licht gemäß Anspruch 1, wobei der Signalgenerator (106, 206) einen einstellbaren Zufallssignalgenerator (210) aufweist, der so konfiguriert ist, dass er zufällig Signalimpulse auf der Grundlage der erfassten Frequenz (104, 204) und Amplitude (105, 205) erzeugt.

3. Störsystem (100, 200, 300) für sichtbares Licht gemäß Anspruch 1, wobei der Signalgenerator (106, 206) einen Signalmodulator (211) aufweist, der so konfiguriert ist, dass er Signalimpulse auf der Grundlage von Störsignaldaten (212) und der detektierten Frequenz (104, 204) und Amplitude (105, 205) erzeugt.

4. Störsystem (100, 200, 300) für sichtbares Licht gemäß den Ansprüchen 2 und 3, wobei die Signalimpulse positive Impulse (323) aufweisen.

5. Störsystem (100, 200, 300) für sichtbares Licht gemäß einem der vorhergehenden Ansprüche, wobei der Signalanalysator (103, 203) eine Recheneinheit (213) aufweist, die so konfiguriert ist, dass sie das erfasste modulierte sichtbare Licht (102, 202) in den Frequenzbereich umwandelt und die Frequenz (104, 204) der Modulation des modulierten sichtbaren Lichts (102, 202) basierend auf dem transformierten modulierten sichtbaren Licht (102, 202) extrahiert.

6. Störsystem (100, 200, 300) für sichtbares Licht gemäß einem der vorhergehenden Ansprüche, wobei der Detektor (101, 201) für sichtbares Licht mindestens ein lichtempfindliches Element (214) und insbesondere mindestens eine optische Linse (215) aufweist, die so konfiguriert ist, dass sie das sichtbare Licht auf das lichtempfindliche Element (214) fokussiert.

7. Störsystem (100, 200, 300) für sichtbares Licht gemäß einem der vorhergehenden Ansprüche, wobei der Signalemitter (108, 208) mindestens eine Lichtquelle (216), insbesondere eine LED, und mindestens eine optische Linse (217) aufweist, die so ausgebildet ist, dass sie das von der Lichtquelle (216) erzeugte sichtbare Licht streut.

8. Verfahren zum Stören von sichtbarem Licht zum Stören der Datenkommunikation in einem Kommunikationssystem (150) für sichtbares Licht, wobei das Verfahren zum Stören von sichtbarem Licht aufweist:
Erfassen (S1) von moduliertem sichtbaren Licht (102, 202) des Kommunikationssystems (150) für sichtbares Licht,
Identifizieren (S2) einer Frequenz (104, 204) und einer Amplitude (105, 205) des erfassten modulierten sichtbaren Lichts (102, 202),
Erzeugen (S3) eines störenden sichtbaren Lichtsignals (107, 207) gemäß der identifizierten Frequenz (104, 204) und Amplitude (105, 205), das, wenn es ausgesendet wird, das modulierte sichtbare Licht (102, 202) des Kommunikationssystems für sichtbares Licht (150) stört, und
Aussenden (S4) des störenden sichtbaren Lichtsignals (107, 207).

9. Verfahren zum Stören von sichtbarem Licht gemäß Anspruch 8, wobei das Erzeugen (S3) ein einstellbares Erzeugen von zufälligen Signalimpulsen basierend auf der erfassten Frequenz (104, 204) und Amplitude (105, 205) aufweist.

10. Verfahren zum Stören von sichtbarem Licht gemäß Anspruch 8, wobei das Erzeugen (S3) das Erzeugen von Signalimpulsen auf der Grundlage von Störsignaldaten (212) und der erfassten Frequenz (104, 204) und Amplitude (105, 205) aufweist.

11. Verfahren zum Stören von sichtbarem Licht gemäß den Ansprüchen 9 und 10, wobei das Erzeugen von Signalimpulsen das Erzeugen von positiven Impulsen (323) aufweist.

12. Verfahren zum Stören von sichtbarem Licht gemäß einem der vorhergehenden Ansprüche 8 bis 11, wobei das Analysieren (S2) ein Umwandeln des detektierten modulierten sichtbaren Lichts (102, 202) in den Frequenzbereich und ein Extrahieren der Frequenz (104, 204) der Modulation des modulierten sichtbaren Lichts (102, 202) basierend auf dem transformierten modulierten sichtbaren Licht (102, 202) aufweist.

13. Verfahren zum Stören von sichtbarem Licht gemäß einem der vorhergehenden Ansprüche 8 bis 12, wobei das Erfassen (S1) das Erfassen (S1) des modulierten sichtbaren Lichts (102, 202) mit mindestens einem lichtempfindlichen Element (214) und insbesondere mindestens einer optischen Linse (215) aufweist, die so konfiguriert ist, dass sie das sichtbare Licht auf das lichtempfindliche Element (214) fokussiert.

14. Verfahren zum Stören von sichtbarem Licht gemäß einem der vorhergehenden Ansprüche 8 bis 13, wobei das Aussenden (S4) das Aussenden (S4) des störenden sichtbaren Lichtsignals (107, 207) mit mindestens einer Lichtquelle (216), insbesondere einer LED, und mindestens einer optischen Linse (216) aufweist, die konfiguriert ist, um das von der Lichtquelle (216) erzeugte sichtbare Licht zu streuen.

## Revendications

1. Système de brouillage en lumière visible (100, 200, 300) pour brouiller la communication de données dans un système de communication en lumière visible (150), le système de brouillage en lumière visible (100, 200, 300) comprenant :
un détecteur de lumière visible (101, 201) configuré pour détecter la lumière visible modulée (102, 202) du système de communication en lumière visible (150),
un analyseur de signaux (103, 203) couplé au détecteur de lumière visible (101, 201) et configuré pour identifier une fréquence (104, 204) et une amplitude (105, 205) de la lumière visible modulée détectée (102, 202),
un générateur de signaux (106, 206) couplé à l'analyseur de signaux (103, 203) et configuré pour générer un signal de lumière visible perturbatrice (107, 207) en fonction de la fréquence (104, 204) et de l'amplitude (105, 205) identifiées, qui, lorsqu'il est émis, perturbe la lumière visible modulée (102, 202) du système de communication de lumière visible (150), et
un émetteur de signaux (108, 208) couplé au générateur de signaux (106, 206) et configuré pour émettre le signal de lumière visible de perturbation (107, 207).

2. Système de brouillage de lumière visible (100, 200, 300) selon la revendication 1, dans lequel le générateur de signal (106, 206) comprend un générateur de signal aléatoire réglable (210) configuré pour générer de manière aléatoire des impulsions de signal en fonction de la fréquence (104, 204) et de l'amplitude (105, 205) détectées.

3. Système de brouillage de lumière visible (100, 200, 300) selon la revendication 1, dans lequel le générateur de signal (106, 206) comprend un modulateur de signal (211) configuré pour générer des impulsions de signal sur la base de données de signal de brouillage (212) et de la fréquence (104, 204) et de l'amplitude (105, 205) détectées.

4. Système de brouillage de la lumière visible (100, 200, 300) selon les revendications 2 et 3, dans lequel les impulsions de signal comprennent des impulsions positives (323).

5. Système de brouillage de lumière visible (100, 200, 300) selon l'une quelconque des revendications précédentes, dans lequel l'analyseur de signaux (103, 203) comprend une unité de calcul (213) configurée pour convertir la lumière visible modulée détectée (102, 202) dans le domaine des fréquences et extraire la fréquence (104, 204) de la modulation de la lumière visible modulée (102, 202) sur la base de la lumière visible modulée transformée (102, 202).

6. Système de brouillage de la lumière visible (100, 200, 300) selon l'une quelconque des revendications précédentes, dans lequel le détecteur de lumière visible (101, 201) comprend au moins un élément photosensible (214) et notamment au moins une lentille optique (215) configurée pour focaliser la lumière visible sur l'élément photosensible (214).

7. Système de brouillage de la lumière visible (100, 200, 300) selon l'une quelconque des revendications précédentes, dans lequel l'émetteur de signal (108, 208) comprend au moins une source de lumière (216), en particulier une DEL, et au moins une lentille optique (217) configurée pour étaler la lumière visible générée par la source de lumière (216).

8. Méthode de brouillage de la lumière visible pour brouiller la communication de données dans un système de communication à lumière visible (150), la méthode de brouillage de la lumière visible comprenant :
la détection (S1) de la lumière visible modulée (102, 202) du système de communication en lumière visible (150),
en identifiant (S2) une fréquence (104, 204) et une amplitude (105, 205) de la lumière visible modulée détectée (102, 202),
générer (S3) un signal de lumière visible perturbateur (107, 207) en fonction de la fréquence (104, 204) et de l'amplitude (105, 205) identifiées, qui, lorsqu'il est émis, perturbe la lumière visible modulée (102, 202) du système de communication en lumière visible (150), et
émettant (S4) le signal lumineux visible de perturbation (107, 207).

9. Méthode de brouillage de la lumière visible selon la revendication 8, dans laquelle la génération (S3) comprend la génération réglable d'impulsions de signal aléatoires sur la base de la fréquence (104, 204) et de l'amplitude (105, 205) détectées.

10. Méthode de brouillage de la lumière visible selon la revendication 8, dans laquelle la génération (S3) comprend la génération d'impulsions de signal basées sur des données de signal de brouillage (212) et la fréquence (104, 204) et l'amplitude (105, 205) détectées.

11. Méthode de brouillage de la lumière visible selon les revendications 9 et 10, dans laquelle la génération d'impulsions de signal comprend la génération d'impulsions positives (323).

12. Méthode de brouillage de la lumière visible selon l'une quelconque des revendications 8 à 11 précédentes, dans laquelle l'analyse (S2) comprend la conversion de la lumière visible modulée détectée (102, 202) dans le domaine fréquentiel et l'extraction de la fréquence (104, 204) de la modulation de la lumière visible modulée (102, 202) sur la base de la lumière visible modulée transformée (102, 202).

13. Méthode de brouillage de la lumière visible selon l'une quelconque des revendications précédentes 8 à 12, dans laquelle la détection (S1) comprend la détection (S1) de la lumière visible modulée (102, 202) avec au moins un élément photosensible (214) et notamment au moins une lentille optique (215) configurée pour focaliser la lumière visible sur l'élément photosensible (214).

14. Méthode de brouillage de la lumière visible selon l'une quelconque des revendications précédentes 8 à 13, dans laquelle l'émission (S4) comprend l'émission (S4) du signal de lumière visible perturbatrice (107, 207) avec au moins une source lumineuse (216), en particulier une DEL, et au moins une lentille optique (216) configurée pour étaler la lumière visible générée par la source lumineuse (216).
